(19) Europäisches Patentamt
European Patent Office
Office européen des brevets

(11) EP 1 837 377 A1

(12) **EUROPEAN PATENT APPLICATION**
published in accordance with Art. 158(3) EPC

(43) Date of publication:
**26.09.2007 Bulletin 2007/39**

(21) Application number: **05816783.4**

(22) Date of filing: **13.12.2005**

(51) Int Cl.:
***C09B 29/42*** *(2006.01)* ***B41J 2/01*** *(2006.01)*
***C09D 11/00*** *(2006.01)*

(86) International application number:
**PCT/JP2005/022830**

(87) International publication number:
**WO 2006/064784 (22.06.2006 Gazette 2006/25)**

(84) Designated Contracting States:
**CH DE FR GB IT LI**

(30) Priority: **13.12.2004 JP 2004360482**

(71) Applicant: **NIPPON KAYAKU KABUSHIKI KAISHA**
**Tokyo 102-8172 (JP)**

(72) Inventors:
- **ISHII, Yutaka c/o NIPPON KAYAKU KABUSHIKI KAISHA**
  **Tokyo 115-0042 (JP)**
- **MURAKAMI, Yasuo c/o NIPPON KAYAKU KABUSHIKI**
  **Kita-ku, Tok yo 115-0042 (JP)**
- **KAJIURA, Noriko c/o NIPPON KAYAKU KABUSHIKI**
  **Kita-ku, Tokyo 115-0042 (JP)**
- **DEJIMA, Yoshiyuki c/o NIPPON KAYAKU KABUSHIKI**
  **Kita-ku, Tokyo 115-0042 (JP)**

(74) Representative: **Gille Hrabal Struck Neidlein Prop Roos**
**Bruckner strasse 20**
**40593 Düsseldorf (DE)**

(54) **NOVEL AZO COMPOUND OR SALT, INK COMPOSITION CONTAINING SUCH AZO COMPOUND, AND COLORED MATERIAL**

(57) [Method for solving the problems]

The present invention relates to an azo compound represented by the following Formula (1) in free acid form or a salt thereof,

[KA 1]

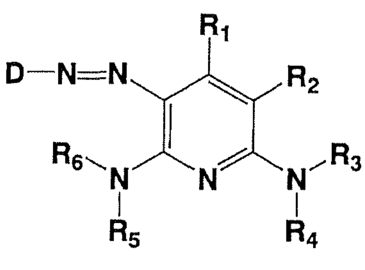

(1)

(wherein, D represents a residual group of aromatic ring or heterocyclic diazo components, $R_1$ represents a hydrogen atom, a C1 to C4 alkyl group or a trifluoromethyl group, $R_2$ represents a hydrogen atom, a cyano group or a carbamoyl group, $R_3$, $R_4$, $R_5$ and $R_6$ may be the same or different respectively and each represents a hydrogen atom, a C1 to C4 alkyl group substituted by a sulfonic acid group or a carboxyl group) and an ink composition **characterized by** comprising the same, and said composition is excellent in storage stability, exhibits orange color by itself and hue with highly vividness when used for inkjet recording, provides strong fastnesses such as light fastness and ozone fastness of a recorded article, and is suitable for inkjet recording.

EP 1 837 377 A1

## Description

Technical Field

The present invention relates to a novel azo compound or a salt thereof, an ink composition comprising the azo compound, and a colored article obtained by using the same.

Background of the Invention

For a recording method by means of an inkjet print as a typical method among various color recording methods, various methods of discharging ink have been developed, and any of them performs recording by generating ink droplets and depositing them onto various record-receiving materials (such as paper, film and cloth). This method has been rapidly prevailing lately and is expected to grow remarkably in the future because of such features as less noise generation due to no contact of a recording head with a record-receiving material and easiness in downsizing, speedup and colorization.

Conventionally, as an ink for a fountain pen or a felt pen and an ink for inkjet recording, a water-based ink dissolving a water-soluble dye in an aqueous medium has been used, and in these water-based inks, a water-soluble organic solvent is generally added to prevent ink from clogging at a pen tip or an inkjet nozzle. These conventional inks are required to provide a recorded image of sufficient density, not to clog at a pen tip or an inkjet nozzle, to dry quickly on a record-receiving material, to bleed less, and to have good storage stability, and a formed image is required to have image fastnesses such as water fastness, light fastness, and moisture fastness.

Meanwhile, when an image or character information on a color display of a computer is recorded in color by an inkjet printer, they are generally rendered by subtractive color mixing inks of four colors, yellow (Y), magenta (M), cyan (C), and black (K). In order to reproduce, as faithfully as possible, an image by additive color mixing of red (R), green (G) and blue (B) on a CRT display and the like with an image by subtractive color mixing, each of Y, M and C is desired to have each hue which is as close to each standard as possible and vividness, however, using only Y, M and C is insufficient in hue and vividness for recording a photo tone image. Though R, G and B obtained by mixing in advance Y, M and C to be used conventionally as ink for inkjet are used, there still remains such a problem as less vividness.

An inkjet printing method using inks of seven colors (Y, M, C, R, G, B and K) is proposed so as to solve these problems (for example, see Patent Literature 1), however, requirements of the marketplace in hue, vividness, fastness and the like have not satisfied completely because dyes for vat dyeing (vat dye) which have a soluble group are used. And R is used in Patent Literature 1, however, it is known that using orange (O) instead of R so as to improve vividness provides a more vivid image. Mars yellow direct dye is also included as a yellow coloring agent of ink set for inkjet recording (for example, see Patent Literature 2).

A similar compound to the present invention is also described in Patent Literature 3, however, the compound is a crimson color and has inappropriate hue for ink for inkjet. In addition, the compound described in Patent literature 3 is a reactive dye having a leaving group, and water solubility decreases when the leaving group leaves. Sulfuric acid is produced during its leaving, which results in lowering the pH and may exert a harmful influence on an inkjet printer head. In these points of view, the compound described in Patent Literature 3 is not suitable for applications of inkjet.

Also a coloring matter for inkjet recording is required to provide a high density of a printed image and also to be excellence in fastnesses such as water fastness, moisture fastness, light fastness, and gas fastness. Gas fastness means durability against phenomenon that oxidizing ozone gas and the like present in the air reacts with a dye on and in a recording paper to incur discoloration or fading of a printed image. Ozone gas is said to be a causative substance to promote the phenomenon of fading an inkjet recorded image.

As this phenomenon of discoloration or fading is characteristics of inkjet images, improvement of ozone gas fastness is an important problem. Especially for an ink-receiving layer provided at the surface of photo quality inkjet paper, so as to dry the ink faster and decrease bleeding in high quality image, a porous material is often used, so discoloration or fading in color caused by ozone gas occurs noticeably on such recording paper. With the recent spread of digital camera, the chance to print an image at home is also increased, and discoloration of a printed image caused by oxidizing gas in the air when the obtained printed article is stored is acknowledged as a problem. Moisture fastness means durability against phenomenon that coloring matter of dye in a record-receiving material bleeds when the colored record-receiving material is stored in a high humid atmosphere. Bleeding of coloring matter of dye especially in an image requiring high-definition image quality like photo tone leads to deteriorating an image quality level significantly, so it is important to cause as less bleeding as possible. Therefore, moisture fastness is an important problem required to be solved as a coloring matter for inkjet, as with the above ozone gas fastness.

Patent Literature 1 : JP Laid-Open No.241661/2002(Page 1 to 17)

Patent Literature 2 : JP Laid-Open No.256187/2002(Page 4)
Patent Literature 3 : JP Laid-Open No.47361/1982(Page 16)

Disclosure of the Invention

Problems to Be Solved by the Invention

An object of the present invention is to provide a water-soluble coloring matter (compound) which has high solubility in water and suitable hue and vividness for inkjet recording and is excellent in light fastness, moisture fastness and gas fastness of a recorded article, and an ink composition comprising the same.

Means of Solving the Problems

The inventors of the present invention intensively studied a way to solve the above problems and have found that a monoazo compound represented by a specified formula can solve the above problems and complete the present invention.
That is, the present invention relates to:

(1) A water-soluble azo compound represented by the following Formula (1) in free acid form or a salt thereof,

[KA 1]

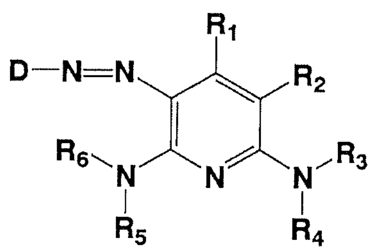

(1)

(wherein, D represents a residual group of aromatic ring or heterocyclic diazo components, $R_1$ represents a hydrogen atom, a C1 to C4 alkyl group or a trifluoromethyl group, $R_2$ represents a hydrogen atom, a cyano group or a carbamoyl group, $R_3$, $R_4$, $R_5$ and $R_6$ may be the same or different respectively and each represents a hydrogen atom or a C1 to C4 alkyl group substituted by a sulfonic acid group or a carboxyl group),

(2) The azo compound or a salt thereof according to (1), wherein $R_4$ and $R_5$ are hydrogen atoms,
(3) The azo compound or a salt thereof according to (1), wherein $R_4$ and $R_5$ are hydrogen atoms and $R_3$ and $R_6$ are 2-sulfoethyl groups or 2-carboxyethyl groups,
(4) An azo compound represented by the following Formula (2) in free acid form or a salt thereof,

[KA 2]

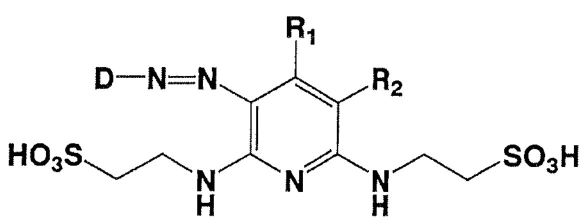

(2)

(wherein, D represents a residual group of aromatic ring or heterocyclic diazo components, $R_1$ represents a hydrogen atom, a C1 to C4 alkyl group or a trifluoromethyl group, and $R_2$ represents a cyano group or a carbamoyl group),

(5) The azo compound or a salt thereof according to any one of (1) to (4), wherein D is a group represented by the following Formula (3) or (4),

[KA 3]

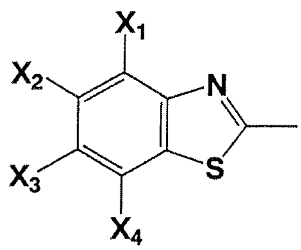
(3)

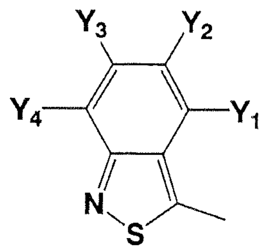
(4)

(wherein, each of $X_1$, $X_2$, $X_3$, $X_4$, $Y_1$, $Y_2$, $Y_3$ and $Y_4$ independently represents a hydrogen atom, a halogen atom, a nitro group, a cyano group, a hydroxyl group, a sulfonic acid group, a substituted or unsubstituted alkyl group, an alkoxy group, a carboxyl group, a carbamoyl group, an alkoxycarbonyl group, an acyl group, an acylamino group, an alkylsulfonyl group, a thiocyano group and a sulfamoyl group),

(6) An ink composition characterized by comprising the azo compound according to the above (1) to (5),
(7) The water-based ink composition according to the above (6), comprising water and a water-soluble organic solvent,
(8) The ink composition according to (7), which is for inkjet,
(9) The ink composition according to any one of the above (6) to (8), wherein the content of an azo compound according to the above (1) to (5) is 0.1 to 20 weight%,
(10) The ink composition according to any one of the above (6) to (9), which is orange,
(11) A recording method characterized by that information is recorded on a record-receiving material using the orange ink composition according to the above (10) as an ink composition in an inkjet recording method performed by using inks of no less than 4 colors of yellow, magenta , cyan coloring matters and orange coloring matter added thereto,
(12) The inkjet recording method according to the above (11), wherein a record-receiving material is an information transmission sheet,
(13) The inkjet recording method according to the above (12), wherein the information transmission sheet has an ink image-receiving layer comprising a porous white inorganic substance,
(14) A colored article which is colored with the orange ink composition for inkjet recording according to the above (10),
(15) The colored article according to the above (14), wherein coloring is performed by a printer,
(16) An inkjet printer which is loaded with a container containing the water-based orange ink composition according to the above (10),
(17) The azo compound or a salt thereof according to the above (1), wherein in Formula (1), D is a substituted or unsubstituted benzothiazole group or a substituted or unsubstituted isobenzothiazole group, and a substituent is selected from the group consisting of a hydroxyl group, a sulfonic acid group, an alkylsulfonyl group, an alkoxy group or a carboxyl group.

Effect of the Invention

An azo compound in Formula (1) of the present invention has characteristics that it provides a highly vivid and brilliant hue on inkjet recording paper, and that it has excellent water-solubility and a good filtration property on a membrane filter in the production of preparing an ink composition. An aqueous solution containing this compound alone or together with ammonia preferably takes on orange. An ink composition of the present invention using this compound does not cause crystal deposition, change in physical property, or color change after storage for a long period of time, and has favorable storage stability. A printed article obtained by using an azo compound of the present invention for

orange ink for inkjet recording has an ideal orange hue without selecting a record-receiving material (paper, film and the like), and using the azo compound can reproduce more highly vivid orange and red than those reproduced by using yellow and magenta inks to be conventionally used for inkjet recording. Using an orange ink composition of the present invention together with inks of three primary colors, yellow, magenta and cyan can also reproduce the hue of a photo tone color image faithfully on paper. In addition, when said photo tone color image is recorded on a record-receiving material, the surface of which is coated with inorganic fine particles like photo quality inkjet paper (film), it has good various fastnesses of light fastness, ozone fastness and moisture fastness and excellent storage stability for a long period of time of a photo tone recorded image. Therefore, an azo compound of Formula (1) is extremely useful as an ink coloring matter for inkjet recording. A water-soluble monoazo compound of Formula (1) can be also used for toning other colors, especially black.

Best Mode for Carrying out the invention

The present invention will be described in detail hereinafter. In the present invention, unless otherwise specified, a sulfonic acid group and a carboxyl group are shown in free acid form.
A coloring matter for ink of the present invention is represented by the above Formula (1) in free acid form.
In the present invention, preferable alkyl groups for an alkyl group, an alkoxy group and an alkylsulfonyl group and the like include a C1 to C4 alkyl group such as a methyl group, an ethyl group, an n-propyl group and an iso-propyl group, more preferably a methyl group.
$R_1$ in Formula (1) represents a substituted or unsubstituted alkyl group. The alkyl group includes a C1 to C4 alkyl group such as a methyl group, an ethyl group, an n-propyl group and an iso-propyl group, preferably a methyl group.
$R_2$ in Formula (1) represents a hydrogen atom, a cyano group or a carbamoyl group, preferably a cyano group.
$R_3$, $R_4$, $R_5$ and $R_6$ in Formula (1) can be the same or different respectively, and each represents a hydrogen atom or a C1 to C4 alkyl group substituted by a sulfonic acid group or a carboxyl group. Preferable ones for $R_3$, $R_4$, $R_5$ and $R_6$ among them are each independently a hydrogen atom, 2-sulfoethyl, a sulfomethyl group, a 2-carboxyethyl group and a carboxymethyl group. More preferably, $R_4$ and $R_5$ are hydrogen atoms, and $R_3$ and $R_6$ are 2-sulfoethyl groups or 2-carboxyethyl groups, more preferably 2-sulfoethyl groups.
D in Formula (1) represents a residual group of aromatic ring or heterocyclic diazo components. An aromatic ring represents a substituted or unsubstituted aromatic ring-residual group with a carbon number of C6 to C10, for example, a phenyl group or a substituted or unsubstituted naphthyl group. A heterocyclic group includes a 5 to 6 member heterocyclic residual group which contains 1 to 3, preferably 1 to 2 of ones selected from a nitrogen atom, an oxygen atom and a sulfur atom and may have an aromatic ring with a carbon number of C6 to C10, and specifically includes a pyrazole ring, an imidazole ring, a thiazole ring, a benzothiazole ring, an isothiazole ring, a benzoisothiazole ring and a thiadiazole ring, preferably a benzothiazole ring and a benzoisothiazole ring. These heterocycles may be substituted. The substitutuent includes a halogen atom (for example, a chlorine atom, a bromine atom, a fluorine atom, and the like), a nitro group, a cyano group, a hydroxyl group, a sulfonic acid group, a substituted or unsubstituted alkyl group, an alkoxy group, a carboxyl group, a carbamoyl group, an alkoxycarbonyl group, an acyl group, an acylamino group, an alkylsulfonyl group, a thiocyano group, sulfamoyl group or the like, preferably a hydroxyl group, a sulfonic acid group, a C1 to C4 alkoxy group, a carboxyl group, a C1 to C4 alkylsulfonyl group and the like. More preferably, D is a residual group of diazo components represented by the above Formulas (3) or (4). The group represented by the above Formula (3) of D is more preferably when any of $X_1$, $X_2$ and $X_4$ is a hydrogen atom, and $X_3$ is a hydrogen atom, a hydroxyl group, a sulfonic acid group, an alkoxy group, a carboxyl group or an alkylsulfonyl group and further preferably a hydrogen atom or a sulfonic acid group. And the group represented by the above Formula (4) of D is more preferably when any of $Y_1$, $Y_3$ and $Y_4$ is a hydrogen atom, and $Y_2$ is a hydrogen atom, a sulfonic acid group or a carboxyl group and further preferably a hydrogen atom or a sulfonic acid group.
A preferable compound in Formula (1) of the present invention is a compound where $R_1$ is a C1 to C4 alkyl group, preferably a methyl group, $R_2$ is a cyano group or a carbamoyl group, preferably a cyano group, $R_4$ and $R_5$ are hydrogen atoms, $R_3$ and $R_6$ are sulfo C1 to C4 alkyl, preferably sulfoethyl groups, and D is Formula (3) or (4), preferably Formula (3), and $X_3$ is a group selected from the groups consisting of a hydrogen atom, a hydroxyl group, a sulfonic acid group and an alkoxy group, more preferably a C1 to C4 alkoxy group, a carboxyl group and an alkylsulfonyl group, more preferably a C1 to C4 alkylsulfonyl group, and further preferably $X_3$ is a hydrogen atom or a sulfonic acid group.
A salt of the compound of Formula (1) is an inorganic or organic cation salt. The salt includes a lithium salt, a sodium salt, a potassium salt, or an ammonium salt represented by the general Formula (5),
**[0022]**

[KA 4]

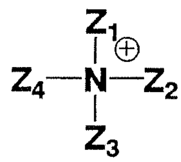 (5)

(wherein, each of $Z_1$ to $Z_4$ independently represents a hydrogen atom, an alkyl group, a hydroxyalkyl group or a hydroxyalkoxyalkyl group).

For $Z_1$ to $Z_4$ in Formula (2), examples of an alkyl group include a C1 to C4 alkyl group such as a methyl group and an ethyl group, examples of a hydroxyalkyl group include a C1 to C4 hydroxyalkyl group such as a hydroxymethyl group, a 2-hydroxyethyl group, a 3-hydroxypropyl group, a 2-hydroxypropyl group, a 4-hydroxybutyl group, a 3-hydroxybutyl group and a 2-hydroxybutyl group, and examples of a hydroxyalkoxyalkyl group include a hydroxy C1 to C4 alkoxy C1 to C4 alkyl group such as a hydroxyethoxymethyl group, a 2- hydroxyethoxyethyl group, a 3-hydroxyethoxypropyl group, a 3-hydroxyethoxybutyl group and a 2-hydroxyethoxybutyl group. Preferable ones among them include a sodium salt, a potassium salt, a lithium salt, a monoethanolamine salt, a diethanolamine salt, a triethanolamine salt, a monoisopropanolamine salt, a diisopropanolamine salt, a triisopropanolamine salt, an ammonium salt and the like. Especially preferable ones are a lithium salt and a salt of sodium.

The above salts, for example, a sodium salt can be obtained as a wet cake, by addition of sodium chloride to a reaction solution or a dissolving solution of a cake or a dried thereof in water, followed by salting out and filtration. Further, after the wet cake is dissolved in water again, hydrochloric acid is added thereto to adjust the pH to 1 to 2 and free acid form (or partly as sodium salt itself) can be obtained by filtration of the obtained crystals. Furthermore, while the free acid wet cake being stirred together with water, for example, potassium hydroxide, lithium hydroxide, ammonia water or a compound of Formula (6) is added thereto for turning to alkaline, to obtain each corresponding potassium salt, lithium salt, ammonium salt or organic salt. Among them especially preferable one is a salt of lithium and sodium.

A compound represented by Formula (1) of the present invention can be produced by the following manner for example. That is, dichloropyridine represented by Formula (A) and substituted amine represented by Formula (B) or (C) are stirred under heating at 80 to 160˚C, for example, with a polar solvent such as dimethylsulfoxide to obtain a coupler component represented by the Formula (D). Subsequently, a diazo component represented by Formula (E) is diazotized in a conventional method, and then subjected to coupling with a coupler of (D) to obtain one. Herein $R_1$ to $R_6$ and D in Formulas (A) to (E) are the same as above.

[KA 5]

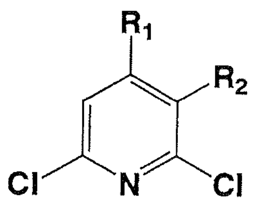 (A)

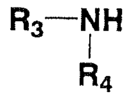 (B)

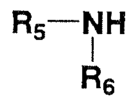 (C)

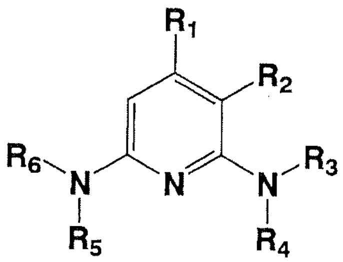 (D)

$D-NH_2$ (E)

Substituted amine represented by the Formula (B) or (C) includes, for example, aminoalkyl sulfonic acid or aminoalkyl carboxylic acid, specifically aminoalkylsulfonic acid includes aminomethylsulfonic acid, aminoethylsulfonic acid, aminopropylsulfonic acid, aminobutylsulfonic acid and the like, and aminoalkylcarboxylic acid includes aminoacetic acid, aminopropionic acid, aminobutyric acid and the like. 2-aminopropionic acid or 2-aminoethylsulfonic acid is preferable, and 2-aminoethylsulfonic acid is more preferable.

A diazo component represented by Formula (E) includes an aromatic amine with a carbon number of C6 to C10 or a 5 to 6 member heterocyclic amine which may have an aromatic ring with a carbon number of C6 to C10, preferably benzothiazole amine which may have a substituent or benzoisothiazole amine which may have a substituent and the like, more preferably benzothiazole amine which may have a substituent. Substituents for these groups include a halogen atom (for example, a chlorine atom, a bromine atom, fluorine atom and the like), a nitro group, a cyano group, a hydroxyl group, a sulfonic acid group, a substituted or unsubstituted alkyl group, an alkoxy group, a carboxyl group, a carbamoyl group, an alkoxycarbonyl group, an acyl group, an acylamino group, an alkylsulfonyl group, a thiocyano group, a sulfamoyl group and the like, preferably a hydroxyl group, a sulfonic acid group, a C1 to C4 alkoxy group, a carboxyl group, a C1 to C4 alkylsulfonyl group and the like. The position of a substituent is preferably the sixth position of a benzothiazole group or the fifth position of a benzoisothiazole group.

Specific examples of an azo compound represented by Formula (1) include examples of Compounds No. 1 to 15 for example. The most preferable one among them is a compound of Compound No. 1 or No. 2.

[Table 1]

| Compound No. | Structural Formula |
|---|---|
| 1 | 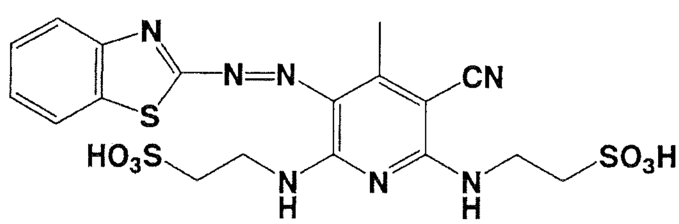 |
| 2 | 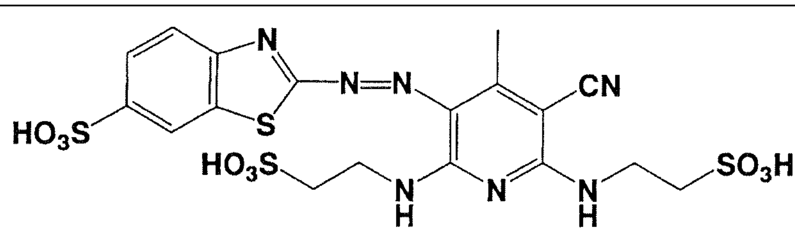 |

(continued)

| Compound No. | Structural Formula |
|---|---|
| 3 | 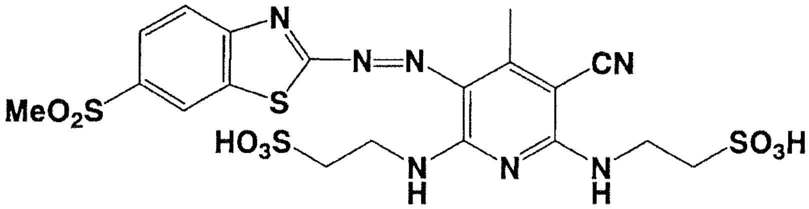 |
| 4 | 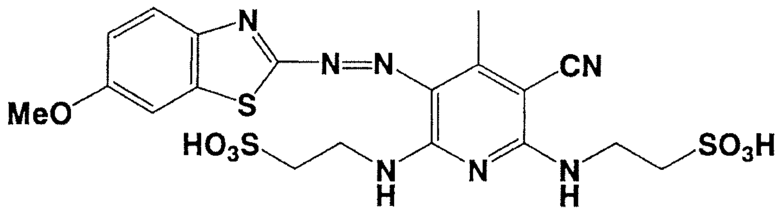 |
| 5 | 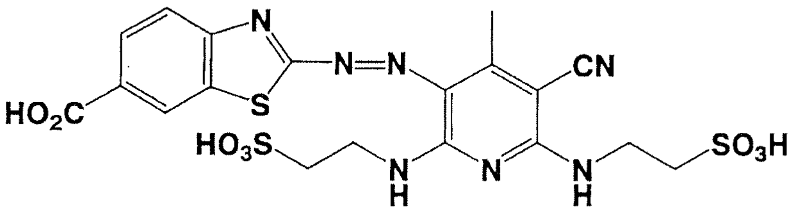 |
| 6 | 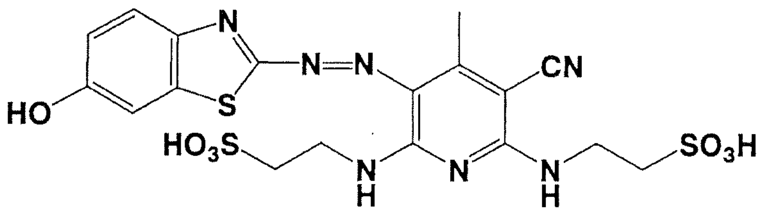 |
| 7 | 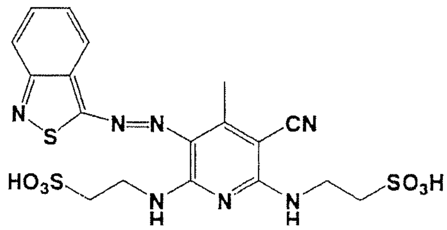 |
| 8 | 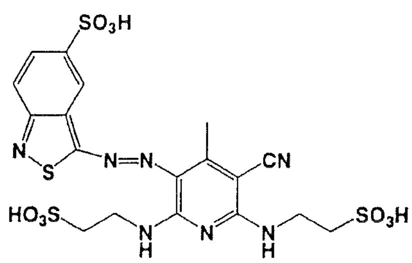 |

(continued)

| Compound No. | Structural Formula |
|---|---|
| 9 | 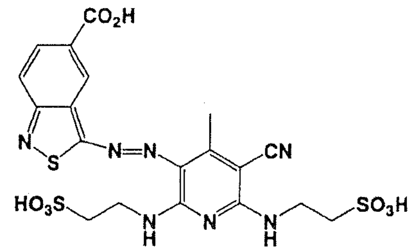 |
| 1 0 | 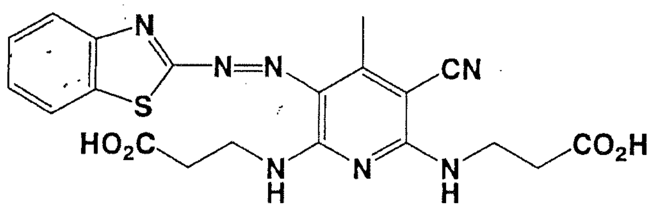 |
| 1 1 | 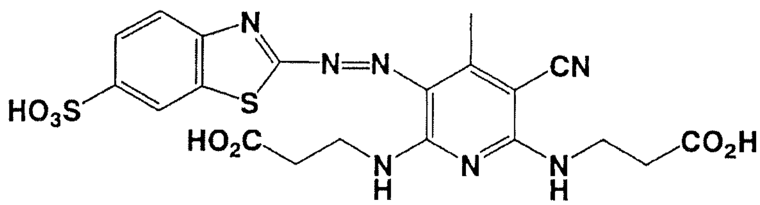 |
| 1 2 | 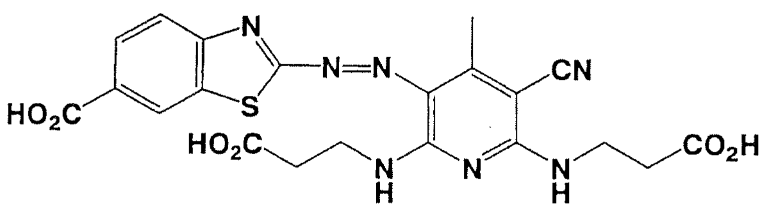 |
| 1 3 | 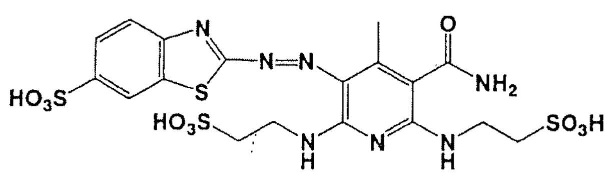 |
| 14 | 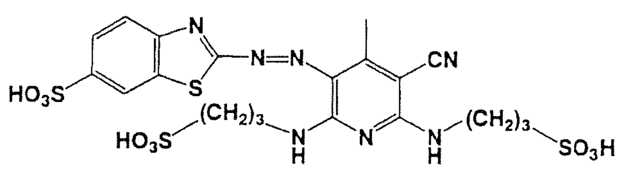 |
| 1 5 | 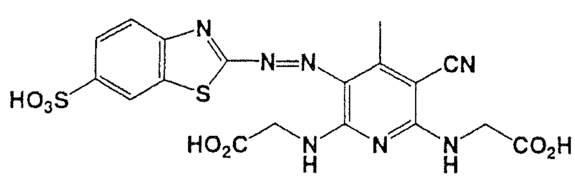 |

As an orange coloring matter for ink, a compound of the present invention can be used for dyeing natural and synthetic fiber materials or textile blend , however, it is more suitable for production of an ink for writing and an ink

composition for inkjet recording.

A reaction solution containing a compound of Formula (1) of the present invention can be used directly for production of an ink composition. Otherwise, the compound can be isolated from the reaction solution, dried, for example, by spray drying, and then processed into an ink composition.

An ink composition of a final product is a water-based ink composition containing usually 0.1 to 20 weight%, more preferably 1 to 15 weight%, further preferably 2 to 10 weight% of a composition of the present invention in water or water containing a water-soluble organic solvent (aqueous solvent), and the rest may be water only, otherwise contain 0 to 30 weight% (preferably 1 to 30%) of a water-soluble organic solvent and 0 to 10 weight% of other additives. Because the hue is orange when other hue components are not added thereto, it can be usually called a water-based orange ink composition. An ink composition of the present invention may contain 0 to 30 weight% of a water-soluble organic solvent and 0 to 5 weight% of ink preparation agents.

A water-soluble organic solvent to be used in the present invention includes, for example, C1 to C4 alkanol such as methanol, ethanol, n-propanol, isopropanol, n-butanol, isobutanol, sec-butanol, tert-butanol, carboxylic acid amide such as N,N-dimethylformamide or N,N-dimethylacetamide, lactam such as 2-pyrrolidone or N-methyl-2-pyrrolidone, cyclic urea such as 1 ,3-dimethylimidazolidin -2-one or 1,3-dimethylhexahydropyrimid-2-one, ketone or keto alcohol such as acetone, methylethylketone, or 2-methyl-2-hydroxypentan-4-one, cyclic ether such as tetrahydrofuran or dioxane, monomer, oligomer or polyalkylene glycol or thioglycol having a C2 to C6 alkylene unit such as ethylene glycol, 1,2- or 1,3-propylene glycol, 1,2- or 1,4-butylene glycol, 1,6-hexylene glycol, diethylene glycol, triethylene glycol, tetraethylene glycol, dipropylene glycol, thiodiglycol, polyethylene glycol or polypropylene glycol, polyol (triol) such as glycerin or hexane-1.2.6-triol, polyhydric alcohol (C1 to C4) alkylether such as ethylene glycol monomethyl ether or ethylene glycol monoethyl ether, diethylene glycol monomethyl ether or diethylene glycol monoethyl ether or triethylene glycol monomethyl ether or triethylene glycol monoethyl ether, γ-butyrolactone, dimethylsulfoxide or the like. These water-soluble organic solvents are used alone or in mixture thereof.

Preferable ones among them are 2-pyrrolidone, N-methyl-2-pyrrolidone, mono, di or triethylene glycol and dipropylene glycol, more preferably 2-pyrrolidone, N-methyl-2-pyrrolidone and diethylene glycol.

Ink preparation agents include, for example, an antiseptic and fungicide, a pH modifier, a chelating agent, an antirust agent, a water-soluble ultraviolet absorbent, a water-soluble polymer compound, a dye-dissolving agent, a surfactant, and the like. The antiseptic and fungicide includes a compound of, for example, an organic sulfur type, an organic nitrogen sulfur type, an organic halogen type, a haloarylsulfone type, an iodopropargyl type, an N-haloalkylthio type, a benzothiazole type, a nitrile type, a pyridine type, an 8-oxyquinoline type, a benzothiazole type, an isothiazoline type, a dithiol type, a pyridine oxide type, a nitropropane type, an organic tin type, a phenol type, a quaternary ammonium salt type, a triazine type, a thiadiazine type, an anilide type, an adamantane type, a dithiocarbamate type, a brominated indanone type, a benzyl bromoacetate type, an inorganic salt type and the like. The organic halogen type compound includes, for example, sodium pentachlorophenol, the pyridine oxide type compound includes, for example, sodium 2-pyridinethiol-1-oxide, the inorganic salt type compound includes, for example, anhydrous sodium acetate, and the isothiazoline type compound includes, for example, 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, 2-methyl-4-isothiazolin-3-one calcium chloride and the like. Other antiseptic and fungicide includes sodium sorbate, sodium benzoate and the like.

As a pH modifier, any substance can be used as long as it can control the pH of an ink in the range of, for example, 8.0 to 11.0, without impairing an ink to be formulated. Examples of the pH modifier include an alkanolamine such as diethanolamine and triethanolamine, a hydroxide of an alkali metal such as lithium hydroxide, sodium hydroxide and potassium hydroxide; an ammonium hydroxide; a carbonate salt of an alkali metal such as lithium carbonate, sodium carbonate, and potassium carbonate, and the like. The chelating agent includes, for example, sodium ethylenediamine tetraacetate, sodium nitrilotriacetate, sodium hydroxyethylethylenediamine triacetate, sodium diethylenetriamine pentaacetate, sodium uramil diacetate and the like. The antirust agent includes, for example, a hydrogen sulfite salt, sodium thiosulfate, ammonium thioglycolate, diisopropyl ammonium nitrite, pentaerythritol tetranitrate, dicyclohexyl ammonium nitrite and the like.

The water-soluble ultraviolet absorbent includes, for example, sulfonated benzophenone, sulfonated benzotriazole or the like. The water-soluble polymer compound includes, for example, polyvinyl alcohol, a cellulose derivative, polyamine, polyimine, and the like. The dye-dissolving agent includes, for example, urea, ε -caprolactam, ethylene carbonate and the like. The surfactant includes, for example, anionic surfactant, amphoteric surfactant, cationic surfactant, nonionic surfactant and the like. The anionic surfactant includes an alkylsulfocarboxylate, an α-olefin sulfonate, a polyoxyethylenealkylether acetate, N-acylamino acid and a salt thereof, an N-acylmethyltaurine salt, a rosin acid soap, caster oil sulfate, lauryl alcohol sulfate, alkylphenol-type phosphoric ester, alkyl-type phosphoric ester, alkylallyl sulfonate, diethylsulfosuccinate, diethylhexyl sulfosuccinic acid dioctylsulfosuccinate and the like. The cationic surfactant includes a 2-vinylpyridine derivative, a poly 4-vinylpyridine derivative and the like.

The surfactant includes, for example, amphoteric surfactant or nonionic surfactant. The amphoteric surfactant

includes, for example, lauryldimethylaminoacetic acid betaine, 2-alkyl-N-carboxymethyl-N-hydroxyethylimidazolinium betaine, coconut oil fatty acid amide propyldimethylaminoacetic acid betaine, polyoctylpolyaminoethylglycine, and others such as imidazoline derivatives, and the like. The nonionic surfactant includes, for example, ethers such as polyoxyethylene nonylphenyl ether, polyoxyethylene octylphenyl ether, polyoxyethylene dodecylphenyl ether, polyoxyethylene octylphenyl ether, polyoxyethylene oleyl ether, polyoxyethylene lauryl ether, polyoxyethylene alkyl ether, and polyoxyallyl alkyl ether, esters such as polyoxyethylene oleic acid, polyoxyethylene oleate, polyoxyethylene distearate, sorbitan laurate, sorbitan monostearate, sorbitan monooleate, sorbitan sesquioleate, polyoxyethylene monooleate, polyoxyethylene stearate, and acetylene glycols such as 2,4,7,9-tetramethyl-5-decyne-4,7-diol, 3,6-dimethyl-4-octyne-3,6-diol, 3,5-dimethyl-1-hexyne-3-ol (for example, Surfynol 104, 82, 465, and Olfine STG and the like from Nissin Chemical Industry Co., Ltd.).

These ink preparation agents are used alone or in mixture thereof.

A water-based ink composition of the present invention can be produced by dissolving a compound represented by the Formula (1) in water or the above aqueous solvent together with the above ink preparation agents and the like. A compound of Formula (1) with less content of inorganic substance such as a chloride of metal cation and a sulfate salt for coloring matter is preferably used, and the content is, for example, not more than about 1 weight% only as guide. To produce coloring matter with less inorganic substance, for example, desalting treatment may be conducted by a typical method such as a reverse osmosis method.

In the above production method for a water-based ink composition of the present invention, the order of dissolving each component is not especially limited. Coloring matter may be dissolved in water or the above aqueous solvent in advance, and ink preparation agents may be added thereto and dissolved, otherwise after coloring matter may be dissolved in water, an aqueous solvent and ink preparation agents may be added thereto and dissolved. Also a different order from these may be made, and aqueous solvent and ink preparation agents may be added to a reaction solution of coloring matter or a solution of coloring matter subjected to desalting treatment by reverse osmosis membrane to produce an ink composition. For preparation of an ink composition, water to be used is preferably water with less impurity such as ion-exchanged water or distilled water. In addition, if required, foreign substances may be eliminated by a microfiltration method using a membrane filter and the like, and also the microfiltration method is preferably performed when an ink composition of the present invention is used as an ink for inkjet printer. A pore diameter of a filter to be used for the microfiltration method is typically 1 micron to 0.1 micron, preferably 0.8 micron to 0.2 micron.

For an ink composition of the present invention, for example, ammonia water is added to a solution containing an azo compound of the above Formula (1), otherwise an azo compound of the above Formula (1) is dissolved in a solution containing ammonia for example, to provide the condition where an ammonium salt of an azo compound of Formula (1) and other salts, preferably a sodium salt, can be present in mixture.

An orange ink composition containing a water-soluble monoazo compound of the present invention is suitably used for printing, copying, marking, writing, drawing, stamping or recording methods, especially inkjet recording. In this case, high quality orange-printed articles having good fastness against water, sunlight, ozone and rubbing can be obtained. In addition, by formulating known dyes of yellow, magenta and the like for a compound of the present invention, orange tone or red tone can be also changed according to taste. A compound of the present invention can be used for toning other colors, especially for black.

A colored article of the present invention is one colored with a compound of the present invention as mentioned above. Materials to be colored include, not particularly limited, for example, paper, textile, cloth (cellulose, nylon, wool and the like), leather, substrates for color filter, and the like, but not limited thereto. A coloring method includes, for example, methods for dip dyeing, textile printing, printing methods of screen printing and the like, and a method by an inkjet printer and the like, preferably a method by inkjet printer.

A record-receiving material (media) which can be used for an inkjet recording method of the present invention includes, for example, information transmission sheet such as paper, film and the like, textile, leather and the like. The information transmission sheet includes preferably surface-treated one, specifically one provided with an ink receiving layer on these substrates. An ink receiving layer is provided, for example, by impregnating or coating cationic polymer on the above substrate, or by coating a porous white inorganic substance such as porous silica, aluminasol or special ceramics and the like which can absorb coloring matter in the ink on the surface of the above substrate, together with a hydrophilic polymer such as polyvinylalcohol, polyvinylpyrrolidone and the like. Such one as provided with an ink receiving layer are usually called inkjet paper (film) or glossy paper (film), for example, Pictorico (manufactured by Asahi Glass Co., Ltd.), Professional Photopaper, Super Photopaper, and Mat Photopaper (all manufactured by Canon Inc.), Photograph Paper (glossy), Photo Matt Paper and Super Fine Glossy Film (all manufactured by Epson Co., Ltd.), Premium Plus Photo Paper, Premium Glossy Film and Photo Paper (all manufactured by Hewllet Packard Company, Japan), PhotoLikeQP (manufactured by Konica Minolta, Japan), and the like. In addition, naturally plain paper can be used.

Among them, it is especially known that discoloration or fading of an image recorded on a record-receiving material the surface of which is applied with a porous white inorganic substance is proceeded by ozone gas, but a water-based orange ink composition of the present invention is so superior in gas fastness that it has an effect especially in recording on such a record-receiving material.

The porous white inorganic substance includes calcium carbonate, kaolin, talc, clay, diatom earth, synthetic amorphous silica, aluminum silicate, magnesium silicate, calcium silicate, aluminium hydroxide, alumina, lithopone, zeolite, barium sulfate, calcium sulfate, titanium dioxide, zinc sulfide, zinc carbonate and the like.

For recording on a record-receiving material by means of the inkjet recording method of the present invention, for example, a container containing the above ink composition may be set on the predefined position of an inkjet printer and recording may be performed on a record-receiving material in a conventional manner. In the inkjet recording method of the present invention, an orange ink composition of the present invention can be used in combination with a green ink composition, a blue (or violet) ink composition, if required, a black ink composition and the like in addition to a yellow ink composition, a magenta ink composition and a cyan ink composition as known and used. Each color ink composition is injected into each container, and the containers, as well as containers containing a water-based orange ink composition for inkjet recording of the present invention, are set (loaded) in the predefined positions in an inkjet printer to be used. The inkjet printer includes, for example, a printer of piezo method utilizing mechanical vibration, a printer of Bubble Jet (registered trademark) method utilizing bubbles generated by heating, and the like.

A water-based orange ink composition of the present invention is a vivid orange color, especially has a highly vivid hue on inkjet glossy paper, and can provide color with such a color tone that a mixed color of usual yellow ink and magenta ink can't provide, when used together with other inks of yellow and magenta, to obtain recorded articles with excellent color representation. In addition, it gives high fastness to a recorded image and also high safety to human being.

An ink according to the present invention has a good temporal stability and doesn't cause precipitation and separation during storage. The injector (ink head) is not blocked when an ink according to the present invention is used in inkjet recording.

An ink according to the present invention doesn't cause change in physical properties, even when used under constant recirculation for a relatively long period of time by a continuous inkjet printer or used intermittently by an on-demand inkjet printer.

Hereinafter, the present invention will be more specifically explained by Examples. In this connection, "part" and "%" herein are based on weight unless otherwise specified.

Example 1

(Synthesis of Compound No.1)

(1) (Synthesis of 2,6-ditaurino-3-cyano-4-methylpyridine(5))

18.7 parts of 2,6-dichloro-3-cyano-4-methylpyridine, 27.5 parts of taurine, 30.4 parts of potassium carbonate, and 400 parts by volume of dimethylsulfoxide were mixed and reacted at an inside temperature of 140˚C for 3 hours. The reaction solution was cooled and then filtered to obtain a product, which product was dissolved in 200 parts by volume of water, and 500 parts by volume of isopropylalcohol was added dropwise to the solution, followed by filtration to obtain 36.0 parts, 2,6-ditaurino-3-cyano-4-methylpyridine (5) (mixture of free acid and a sodium salt) (yield 98%).

[KA 6]

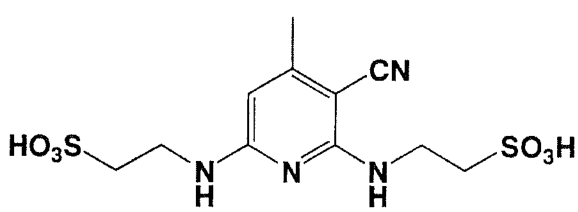

(5)

(2) (Synthesis of Compound No. 1)

After 1.50 parts of 2-aminobenzothiazole was added to 22.5 parts of 85% phosphoric acid, heated to 65˚C for complete dissolution and then cooled, a solution of sodium nitrite was added dropwise thereto for diazotization and a diazonium salt was obtained. After 3.64 parts of the compound obtained in (1) was added to 40 parts by volume of water

and pH was adjusted to 1.5, the mixture was cooled, and the above diazonium salt of 2 -aminobenzothiazole was added dropwise thereto at 0 to 5˚C and pH 1 to 2 for coupling reaction. The resultant was neutralized with sodium hydroxide and then filtered to obtain 16.5 parts of a wet cake of Compound No. 1. After this wet cake was dissolved in 80 parts by volume of water, 20 parts by volume of methanol was added dropwise thereto followed by filtration to obtain 5.09 parts of a compound as represented by Compound No.1 (mixture of free acid and a sodium salt). λmax : 469.0 nm (in an aqueous solution)

Example 2

(Synthesis Example of Compound No. 2)

Following conventional ways, 2.30 parts of 2-amino-6-sulfobenzothiazole was diazotized with sulfuric acid and nitrosylsulfuric acid to obtain a diazonium salt. After 3.64 parts of the compound of Formula (5) obtained in (1) of Example 1 was added to 20 parts by volume of water and pH was adjusted to 1.5, the mixture was cooled, and the above diazonium salt of 2-amino-6-sulfobenzothiazole was added dropwise thereto at 0 to 5˚C and pH 1 to 2 for coupling reaction. The resultant was neutralized with sodium hydroxide and then filtered to obtain 15.2 parts of a wet cake of Compound No. 2. After this wet cake was dissolved in 50 parts by volume of water, 30 parts by volume of methanol was added dropwise thereto followed by filtration to obtain 5.09 parts of a compound as represented by Compound No. 2 (mixture of free acid and a sodium salt). λmax : 492.0 nm (in an aqueous solution)

Example 3

(Synthesis of Compound No. 3)

After 2.28 parts of 2-amino-6-methylsulfonyl benzothiazole was dissolved in 22.5 parts of 85% phosphoric acid, and cooled, and an aqueous solution of sodium nitrite was added dropwise thereto at no higher than 10˚C for diazotization. After 3.64 parts of the compound of Formula (5) obtained in (1) of Example 1 was added to a mixed solution of 100 parts by volume of water and 100 parts by volume of ethanol and pH was adjusted to 1.5, the mixture was cooled, and the above diazonium salt of 2-amino-6-sulfomethylbenzothiazole was added dropwise thereto at 0 to 5˚C and pH 1 to 2 for coupling reaction. The resultant was neutralized with sodium hydroxide and then filtered to obtain 32.2 parts of a wet cake of Compound No.3. After this wet cake was dissolved in 100 parts by volume of water, 30 parts by volume of methanol was added dropwise thereto followed by filtration to obtain 5.40 parts of a compound as represented by Compound No. 3 (mixture of free acid and a sodium salt). λmax : 478.0 nm (in an aqueous solution)

Example 4

(Synthesis of Compound No. 4)

After 1.83 parts of 2-amino-6-methoxybenzothiazole was dissolved in 22.5 parts of 85% phosphoric acid, and cooled, and an aqueous solution of sodium nitrite was added dropwise thereto at no higher than 10˚C for diazotization and a diazonium salt was obtained. After 3.64 parts of the compound of Formula (5) obtained in (1) of Example 1 was added to a mixed solution of 100 parts by volume of water and 100 parts by volume of ethanol and pH was adjusted to 1.5, and cooled, and the above diazonium salt of 2-amino-6-methoxybenzothiazole was added dropwise thereto at 0 to 5˚C and pH 1 to 2 for coupling reaction. The resultant was neutralized with sodium hydroxide and then filtered to obtain 17.8 parts of a wet cake as represented by Compound No. 4. After this wet cake was dissolved in 100 parts by volume of water, 50 parts by volume of methanol was added dropwise thereto followed by filtration to obtain 4.70 parts of a compound as represented by Compound No. 4 (mixture of free acid and a sodium salt). λmax : 476.5 nm (in an aqueous solution)

Example 5

(Synthesis of Compound No. 5)

After 1.94 parts of 2-amino-6-carboxybenzothiazole was dissolved in a mixed solution of 22.5 parts of 85% phosphoric acid and 8.0 parts of acetic acid, and then cooled, and an aqueous solution of sodium nitrite was added dropwise thereto at no higher than 10˚C for diazotization and a diazonium salt was obtained. After 3.64 parts of the compound of Formula (5) obtained in (1) of Example 1 was added to 50 parts by volume of water and pH was adjusted to 1.5, the mixture was cooled, and the above diazonium salt of 2-amino-6-carboxybenzothiazole was added dropwise

thereto at 0 to 5°C and pH 1 to 2 for coupling reaction. The reaction solution was filtered to obtain 28.6 parts of a wet cake of a compound as represented by Compound No. 5. After this wet cake was dissolved in 100 parts by volume of water, 50 parts by volume of methanol was added dropwise thereto followed by filtration to obtain 3.85 parts of a compound as represented by Compound No. 5 (mixture of free acid and a sodium salt). λmax : 489.5 nm (in an aqueous solution)

Example 6

(Synthesis of Compound No. 8)

According to a conventional manner, 2.30 parts of 3-amino-5-sulfobenzoisothiazole was diazotized with sodium nitrite to obtain a diazonium salt. After 3.64 parts of the compound of Formula (5) obtained in (1) of Example 1 was added to 20 parts by volume of water and pH was adjusted to 1.5, the mixture was cooled, and the above diazonium salt of 3-amino-5-sulfobenzoisothiazole was added dropwise thereto at 0 to 5°C and pH 1 to 2 for coupling reaction. To the reaction solution, 6 parts of sodium chloride was added and then filtered to obtain 8.2 parts of a wet cake of Compound No. 8. After this wet cake was dissolved in 40 parts by volume of water, 30 parts by volume of methanol was added dropwise thereto followed by filtration to obtain 5.50 parts of a compound as represented by Compound No. 8 (mixture of free acid and a sodium salt). λmax : 466.0 nm (in an aqueous solution)

Examples 7 to 12

(A) Preparation of an ink

A liquid of a composition shown in the following Table 3 is prepared using a compound (Compound No.1) obtained in (2) of the above Example 1, followed by filtration with a 0.45 μm membrane filter to obtain each water-based ink composition for inkjet recording. Ion exchange water was used as water. In addition, water and ammonia water were added thereto to adjust the pH of the ink composition to 7 to 10 and a total amount of the ink composition to 100 parts. The test using the compound obtained in (2) of Example 1 is Example 7. Similarly the tests using the compounds obtained in Examples 2 to 6 are Examples 8 to 12 respectively.

[Table 3]

Table 3 (ink composition)

| | |
|---|---|
| Compound in (2) of Example 1 (Compound No. 1) | 3.0 parts |
| Glycerine | 5.0 parts |
| Urea | 5.0 parts |
| N-methyl-2-pyrolidone | 4.0 parts |
| Isopropyl alcohol | 3.0 parts |
| Butylcarbitol | 2.0 parts |
| Surfynol 104PG50 (from Nissin Chemical Industry Co., Ltd.) | 0.1 part |
| Water + ammonia water | 77.9 part |
| Total | 100.0 part |

(B) Inkjet printing

Using an inkjet printer (Pixus 860i from Canon Inc.), inkjet recording was conducted on glossy paper having an ink-receiving layer containing a porous white inorganic substance (Professional Photopaper PR-101 from Canon Inc.). In inkjet recording, an image pattern was made so as to obtain gradations of several stages in printing density, and a print was made.

(C) Evaluation of a recorded image

1. Evaluation of hue

1-1. Evaluation of hue for glossy paper

Hue and vividness in a recorded image : recorded paper was measured using a colorimetric system (GRETAG SPM50 from GRETAG Co., Ltd.), values of L*, a* and b* were calculated, and for vividness, $C^* = ((a^*)^2 + (b^*)^2)^{1/2}$ was calculated from color level (a* and b*) where color level a* of each recording paper is similar. The results of hue, brilliance and vividness of Example 7 and 8 are shown in Table 4. And vividness was evaluated on the following 3 levels judging from the measured results and the results are shown jointly in Table 4.

$$90 \leqq C^* \cdots\cdots\cdots \circ$$

$$80 \leqq C^* < 90 \cdots\cdots \triangle$$

$$C^* < 80 \cdots\cdots \times$$

[Table 4]

Table 4

| | Hue | | Brilliance | Vividness |
|---|---|---|---|---|
| | a* | b* | L* | C* |
| Example 7 (No.1) | 53.7 | 96.1 | 66.8 | 109.7 ○ |
| Example 8 (No.2) | 53.5 | 86.8 | 68.3 | 101.9 ○ |

(D) Xenon light fastness test of a recorded image

Using a xenon weatherometer Ci4000 (from ATLAS Co., Ltd.), pieces of testing paper of printed glossy paper and plain paper from Canon, Inc., on which a glass plate having a thickness of 2 mm and an air layer were set up, were irradiated for 50 hours at illuminance of 0.36 $W/m^2$, and color difference ($\Delta E$) before and after the test was measured and evaluated on 3 levels.

$$\Delta E \leqq 10 \cdots\cdots \circ$$

$$10 < \Delta E \leqq 20 \cdots \triangle$$

$$20 < \Delta E \cdots\cdots \times$$

The results are shown in Table 5.

(E) Ozone gas fastness test of a recorded image

Using an ozone weatherometer (from Suga Testing Machine Co., Ltd.), a piece of testing paper printed on glossy paper from Canon, Inc. was left for 3 hours under conditions of ozone concentration of 40 ppm, humidity of 60%

RH and temperature of 24°C, and color difference ($\Delta E$) before and after the test was measured and evaluated on 3 levels.

$\Delta E \leqq 20$ ······○

$20 < \Delta E \leqq 40$ ···△

$40 < \Delta E$ ······×

The results are shown in Table 5.

[Table 5]

Table 5

| Compound No. | Light fastness | Ozone fastness |
|---|---|---|
| Example 7 (No.1) | ○ | ○ |
| Example 8 (No.2) | ○ | ○ |
| Example 9 (No.3) | ○ | ○ |
| Example 10 (No.4) | ○ | ○ |
| Example 11 (No.5) | ○ | ○ |
| Example 12 (No.8) | ○ | ○ |

Judging from Tables 4 and 5, it is found that a coloring matter of the present invention provides very highly vividness and is extremely excellent in light fastness and ozone gas fastness.

## Claims

1. An azo compound represented by the following Formula (1) in free acid form or a salt thereof,

[KA 1]

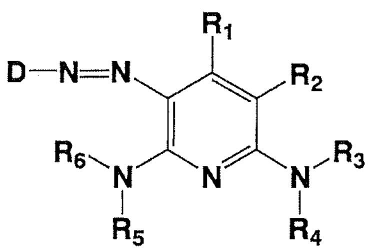

(1)

(wherein, D represents a residual group of aromatic ring or heterocyclic diazo components, $R_1$ represents a hydrogen atom, a C1 to C4 alkyl group or a trifluoromethyl group, $R_2$ represents a hydrogen atom, a cyano group or a carbamoyl group, $R_3$, $R_4$, $R_5$ and $R_6$ may be the same or different respectively and each represents a hydrogen atom or a C1 to C4 alkyl group substituted by a sulfonic acid group or a carboxyl group).

2. The azo compound or a salt thereof according to Claim 1, wherein $R_4$ and $R_5$ are hydrogen atoms.

3. The azo compound or a salt thereof according to Claim 1, wherein $R_4$ and $R_5$ are hydrogen atoms, and $R_3$ and $R_6$ are 2-sulfoethyl groups or 2-carboxyethyl groups.

**4.** An azo compound represented by the following Formula (2) in free acid form or a salt thereof,

[KA 2]

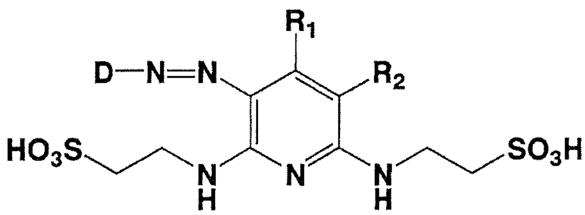

(2)

(wherein, D represents a residual group of aromatic ring or heterocyclic diazo components, $R_1$ represents a hydrogen atom, a C1 to C4 alkyl group or a trifluoromethyl group, and $R_2$ represents a cyano group or a carbamoyl group).

**5.** The azo compound or a salt thereof according to any one of Claims 1 to 4, wherein D is a group represented by the following Formula (3) or (4),

[KA 3]

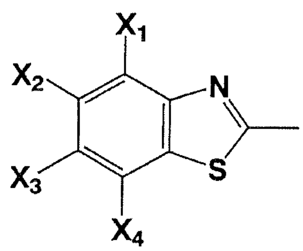

(3)

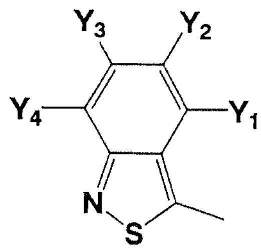

(4)

(wherein, each of $X_1$, $X_2$, $X_3$, $X_4$, $Y_1$, $Y_2$, $Y_3$ and $Y_4$ independently represents a hydrogen atom, a halogen atom, a nitro group, a cyano group, a hydroxyl group, a sulfonic acid group, a substituted or unsubstituted alkyl group, an alkoxy group, a carboxyl group, a carbamoyl group, an alkoxycarbonyl group, an acyl group, an acylamino group, an alkylsulfonyl group, a thiocyano group and a sulfamoyl group).

**6.** An ink composition **characterized by** comprising the azo compound according to Claims 1 to 5.

**7.** The ink composition according to Claim 6, comprising water and water-soluble organic solvent.

**8.** The ink composition according to Claim 7, which is for inkjet.

**9.** The ink composition according to any one of Claims 6 to 8, wherein the content of the azo compound according to Claims 1 to 5 is 0.1 to 20 weight%.

**10.** The ink composition according to any one of Claims 6 to 9, which is orange.

**11.** An inkjet recording method **characterized by** that information is recorded on a record-receiving material using an orange ink composition according to Claim10 as an ink composition in an inkjet recording method performed using inks of no less than 4 colors of yellow, magenta and cyan coloring matters and orange coloring matter added thereto.

**12.** The inkjet recording method according to Claim11, wherein the record-receiving material is an information transmission sheet.

**13.** The inkjet recording method according to Claim 12, wherein the information transmission sheet has an ink-receiving

layer comprising a porous white inorganic substance.

**14.** A colored article which is colored with the orange ink composition for inkjet recording according to Claim10.

**15.** The colored article according to Claim 14, wherein coloring is performed by a printer.

**16.** An inkjet printer which is loaded with a container comprising the orange ink composition according to Claim10.

**17.** The azo compound or a salt thereof according to Claim1, wherein in Formula (1), D is a substituted or unsubstituted benzothiazole group or a substituted or unsubstituted isobenzothiazole group, and a substituent is selected from the group consisting of a hydroxyl group, a sulfonic acid group, an alkylsulfonyl group, an alkoxy group or a carboxyl group.

## INTERNATIONAL SEARCH REPORT

International application No.
PCT/JP2005/022830

A. CLASSIFICATION OF SUBJECT MATTER
***C09B29/42***(2006.01), ***B41J2/01***(2006.01), ***C09D11/00***(2006.01)

According to International Patent Classification (IPC) or to both national classification and IPC

B. FIELDS SEARCHED

Minimum documentation searched (classification system followed by classification symbols)
B41J2/01, C09B29/42, C09D11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAPLUS(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 3-200882 A (Mitsubishi Kasei Corp.), 02 September, 1991 (02.09.91), Claims; page 3, fomula (i) [(i) is Roman alphabetical expression]; example 1 | 1,2,6-16 |
| X<br>A | JP 4-175384 A (Mitsubishi Kasei Corp.), 23 June, 1992 (23.06.92), Claims; page 5, formula (ho) [(ho) is Roman alphabetical expression]; example 5 | 1-3,6-16<br>4 |
| X | JP 2004-51926 A (Fuji Photo Film Co., Ltd.), 19 February, 2004 (19.02.04), Claims; pages 5 to 6, 26 | 1,2,5-17 |

☐ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>15 February, 2006 (15.02.06) | Date of mailing of the international search report<br>28 February, 2006 (28.02.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**
Information on patent family members

International application No.
PCT/JP2005/022830

| | | | |
|---|---|---|---|
| JP 3-200882 A | 1991.09.02 | EP 422668 A | 1991.04.17 |
| | | US 5127947 A | 1992.07.07 |
| | | JP 4-175384 A | 1992.06.23 |
| | | DE 69006813 E | 1994.03.31 |
| JP 4-175384 A | 1992.06.23 | EP 422668 A | 1991.04.17 |
| | | US 5127947 A | 1992.07.07 |
| | | JP 3-200882 A | 1991.09.02 |
| | | DE 69006813 E | 1994.03.31 |
| JP 2004-51926 A | 2004.02.19 | EP 1384762 A1 | 2004.01.28 |
| | | JP 2004-51927 A | 2004.02.19 |
| | | US 2004/0123770 A1 | 2004.07.01 |
| | | US 6929687 B2 | 2005.08.16 |

Form PCT/ISA/210 (patent family annex) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002241661 A
- JP 2002256187 A
- JP 57047361 A